# EUROPEAN PATENT SPECIFICATION

(11) **EP 2 900 366 B1**
(45) Date of publication and mention of the grant of the patent: **16.09.2020**
(21) Application number: 13801779.3
(22) Date of filing: 24.09.2013
(51) Int. Cl.: B01J 20/28, B01J 20/22, B01J 20/10, B01J 20/286, B01J 20/30, B01J 20/32, B01D 39/08, G01N 1/22

(54) **FUNCTIONALIZED SILICEOUS FILTERS FOR SAMPLING AND PURIFICATION OF ORGANIC COMPOUNDS**
FUNKTIONALISIERTE SILIKATISCHE FILTER ZUR PROBENNAHME UND REINIGUNG VON ORGANISCHEN VERBINDUNGEN
FILTRES À BASE DE SILICE FONCTIONNALISÉE PERMETTANT L'ÉCHANTILLONNAGE ET LA PURIFICATION DE COMPOSÉS ORGANIQUES

(30) Priority: 28.09.2012 IT RM20120464
(43) Date of publication of application: 05.08.2015
(73) Proprietor: Consiglio Nazionale Delle Ricerche, 00185 Roma (IT)
(72) Inventor: GUERRIERO, Ettore, I-00185 Roma (IT); PAOLINI, Valerio, I-00185 Roma (IT)
(74) Representative: Currado, Luisa
(86) International application number: PCT/IB2013/058813
(87) International publication number: WO 2014/049522

(56) References cited:
- WO-A2-2008/021161
- US-A1- 2003 209 146
- GUO W ET AL: "Modified glass fiber membrane and its application to membrane affinity chromatography", JOURNAL OF MEMBRANE SCIENCE, ELSEVIER SCIENTIFIC PUBL.COMPANY. AMSTERDAM, NL, vol. 215, no. 1-2, 15 April 2003 (2003-04-15), pages 141-155, XP004418278, ISSN: 0376-7388, DOI: 10.1016/S0376-7388(02)00609-9
- CHEN ET AL: "Protein adsorption separation using glass fiber membranes modified with short-chain organosilicon derivatives", JOURNAL OF MEMBRANE SCIENCE, ELSEVIER SCIENTIFIC PUBL.COMPANY. AMSTERDAM, NL, vol. 305, no. 1-2, 6 October 2007 (2007-10-06), pages 125-135, XP022288014, ISSN: 0376-7388, DOI: 10.1016/J.MEMSCI.2007.07.047 cited in the application
- CELIA D. KELLER ET AL: "Collection of airborne polycyclic aromatic hydrocarbons and other organics with a glass fiber filter-polyurethane foam system", ATMOSPHERIC ENVIRONMENT (1967), vol. 18, no. 4, 1 January 1984 (1984-01-01), pages 837-845, XP055098318, ISSN: 0004-6981, DOI: 10.1016/0004-6981(84)90269-5

## Description

### Background of the invention

The present invention refers to the field of environmental sampling, in particular of pollutants, and more precisely to a process for the preparation of filter systems allowing the simultaneous highly efficient sampling of organic pollutants in liquid or aeriform matrices.

The sampling of organic pollutants in atmosphere is performed on filters that leave out the gaseous fraction of pollutants and therefore these systems are suitable only for the sampling of particulate matter. For this reason, the sampling of semivolatile organic compounds in aeriform matrices is performed by putting, after the filter, an adsorbent or absorbent material, able to retain the gaseous fraction not retained by the filter. Similarly, the sampling of organic compounds in liquid matrices is performed on filtering and adsorbing systems.

The filtering systems obtained by the process of the present invention allow to extract concurrently the organic compounds in fluids, by means of a single filtering and adsorbing system, requiring less time and less amount of extracting solvent. The filtering systems obtained by the process of the present invention are disposable avoiding risks of contamination, are much less bulky and easier to be used in automated sampling systems, and are less hygroscopic so that they can be weighed very easily to determinate the mass of total particulate matter.

### State of the art

### Enrichment of organic compounds from fluid matrices

The sampling of semivolatile organic compounds in atmosphere on common filters (of quartz, paper or teflon) completely leaves out the gaseous fraction of pollutant, which can pass through the filter itself without being retained. Said filters are suitable for sampling of undispersed material on an aeriform matrix. Furthermore filters of quartz have the drawback of being weight with difficulty to determinate the mass of total particulate material because of their high hygroscopy.

The sampling in air of organic semi-volatile compounds is carried out placing after the filter an absorbing/adsorbing material able to retain the vapour fraction of the analyte which is not retained by the filter. Said sampling system can consist for example of an air sampler equipped with a quartz fiber filter with thickness of 102 mm, followed by a polyurethane foam (PUF) adsorbent with a thickness of 50 mm and a density of 0,22 g/cm³. The sampling time is 24 hour, with a flux of 225 L/min, for a total of 300 m³ sampled.

For example, the above type of filtering system is used in the methods of sampling developed by the United States Environmental Protection Agency (EPA): the method TO-4A for the determination in air of pesticides and polychlorinated biphenyls (PCB) by means of sampling on PUF (polyurethane foam) followed by gas-chromatography/multidetector (GC/MD); the method TO-9A for determination in air of polychlorinated, polybrominated and brominated/chlorinated dibenzo-p-dioxins and the method TO-13A for determination in air of polycyclic aromatic hydrocarbon by means of gas-chromatography/mass spectrometry (GC/MS).

The same sampling system is used in method TO-4A, which applies to the analysis of polychlorinated biphenyls (PCB), hexachlorobenzene (HCB) and pesticides. The filter and the PUF are extracted together in a Soxhlet apparatus with a mixture of hexane with 10% of diethyl ether for at least 16 hours. The extracted is then purified by using a column of alumina, or, if the separation needs to be increased, a column of silica and magnesium oxide (Florisil®) and sodium sulphate can be used. The purified and separated fractions are concentrated to a few of microliters (µl) and injected in the gas-chromatograph coupled to a mass spectrometer for the analysis of PCB, or to an electron capture detector for the analysis of HCB; for pesticides, other kinds of detector are used.

The same system for collecting analytes is used in method TO-9A for the analysis of polychlorinated dibenzo-p-dioxins (PCDD) and polychlorinated dibenzofuranes (PCDF), which uses a Soxhlet apparatus, extracting the filter and PUF together with benzene or toluene as the extraction solvent for 16 hours. The extract firstly undergo to a liquid-liquid extraction with an acid and a base, followed by a purification with a column of silica, then of alumina, and lastly of carbon. The sample is concentrated to a volume of few microliters (µl) and injected in the gas-chromatograph with a high-resolution mass spectrometer detector. The same system for collecting analytes is used in method TO-13A, useful for the analysis of polycyclic aromatic hydrocarbon (PAH). The extraction is carried out by using a 10% mixture diethyl ether/hexane and analysing the filter and the d PUF in the Soxhlet for 18 hours. The extracted is purified in a column of silica gel. After being concentrated, the sample is injected in a gas-chromatograph coupled to a mass spectrometer. The PUF has a low recovery for lighter PAHs (naphthalene, acenaphtylene, acenaphtene), because of their high vapour pressure, making them able to volatilize.

The above methods allow to sample the totality of semi-volatile compounds in atmosphere, but they have some limitations. The clean-up of adsorbent and the extraction of analytes from the same require a large consumption of time and reagents and if the extracted adsorbent is reused, there are serious risks of contamination.

The use of two sampling system, constituted by a filtering system and an adsorbing system makes the automation of the sampling difficult, because it is necessary to substitute both systems for every measure. Moreover, also in single and not automated samplings, the encumbrance due to the adsorbent makes the sampling inconvenient, especially if a personal sampler is used for industrial hygiene studies. The described methods do not allow to determinate the ratio between the gaseous fraction and the fraction associated with the particulate matter, because the analytes originally associated with the particulate matter retained by the filter are partially desorbed and then retained by the adsorbent/absorbent material, therefore, sampling on a single sampling system does not lead to a loss of information on partitioning between particulate phase and homogeneous phase with the, liquid or gaseous, matrix, because this information is anyway not available.

For liquid matrices, it is known a type of device which is constituted of a filter with microparticles of silica derivatized with octadecyl or octyl groups dispersed on it (ENVI-Disk™, Sigma Aldrich™), commonly used for solid phase extraction (SPE) of organic compounds from liquid samples, for example aqueous matrices (J. Agric. Food Chem. 2006, 54, 9642-9651, Multiresidue Method for Determination of 35 Pesticides in Virgin Olive Oil by Using Liquid-Liquid Extraction Techniques Coupled with Solid-Phase Extraction Clean Up and Gas Chromatography with Nitrogen Phosphorus Detection and Electron Capture Detection; E. G. Amvrazi and T. A. Albanis).

It may be also possible to use these type of device for sampling organic compounds in atmosphere, but the disadvantage of these type of filters is that the microparticles on which analytes are adsorbed, because they are not bonded to the filtering support, are lost during the time elapsing between sampling and analysis. Urbe I, Ruana J., 1997, J Chromatogr A.;"Application of solid-phase extraction discs with a glass fiber matrix to fast determination of polycyclic aromatic hydrocarbons in water", 778(1-2):337-45 discloses solid phase extraction of polycyclic aromatic hydrocarbon with ENVI-Disk™.

US2003/209146 discloses a filtering system comprising filters made of fibers together with silica particles, wherein the latter are generated from polymerisation of tetraethoxysilane and subsequent silanization with octadecylsilane. Said filter is a little variation of ENVI-Disk™, prepared by treating the surface of the fibers with sodium hydroxide 1N to bound oligosilica spheres generated from the polymerization of tetraethoxysilane and silanizing said oligosilica particles with an octadecyl groups. Said system is used for example for sampling caffeine in a physiological saline solution, or for sampling benzene from air.

Another type of support for solid phase extraction (SPE) of organic compounds from liquid matrices is Empore™ systems produced by 3M™. They are constituted by adsorbent particle, for example divinylbenzene spheres or spheres of silica derivatized with octadecyl groups, spheres of carbon incorporated in a polytetrafluoroethylene (teflon PTFE) network. Empore™ disks are commonly used for solid phase extraction of organic compounds from liquid matrices (Anal. Chem. 1996, 68, 2916-2926, Quantitative Determination of Total Molar Concentrations of Bioaccumulatable Organic Micropollutants in Water Using C18 Empore Disk and Molar Detection Techniques; W. M. G. M. van Loon, F. G. Wijnker, M. E. Verwoerd, and J. L. M. Hermens) . Empore™ disks have been used as passive samplers of organic micropollutants (Anal. Chem. 2003, 75, 4639-4645 Determination of Nitroaromatic Compounds in Air Samples at Femtogram Level Using C18 Membrane Sampling and On-Line Extraction with LC-MS, C. Sanchez, H. Carlsson, A. Colmsjo, C. Crescenzi, and R. Batlle; Journal of Chromatography A, 1129 (2006) 1-8 Air sampling with Empore solid phase extraction membranes and online single-channel desorption/liquid chromatography/mass spectrometry analysis: Determination of volatile and semi-volatile organophosphate esters Johanna Tollback, Davide Tamburro, Carlo Crescenzi, Hakan Carlsson). The resistance and impedance of Empore™ disks allow to sample the air only with low linear speed (flow rate per unit area), unsuitable for the sampling of many semivolatile organic micropollutant, because of their very low concentration.

Are also known the filters named "sandwich filters", produced by Horizon Technologies™ and named Atlantic SPE disks™, based on the same principle of Empore™ disks, but in this case, the adsorbent material is not incorporated in a teflon network but is located between two layers of quartz or paper. Also in this case, the adsorbent material can consist of microsphere of silica derivatised for example with octadecyl groups, styrene/divinylbenzene or carbon. These devices are used for solid phase extraction of organic compounds from liquid matrices (J. Agric. Food Chem., 2006, 54 (3), pp 645-649, "Semiautomated Determination of Pesticides in Water Using Solid Phase Extraction Disks and Gas Chromatography-Mass Spectrometry" Cristiana C. Leandro, Dawn A. Bishop, Richard J. Fussell, Frankie D. Smith, Brendan J. Keely). Their impedance, which is higher than that of Empore™ disks, forces to use fluxes so low that they are unusable for sampling of most of the organic compounds of interest in atmosphere. Moreover, said sandwich disks have a thickness of more than 5 millimeters, contrary to Envi-Disks™ or Empore™ disks which have a thickness of about 1 millimeter, so that they can be hardly inserted in the presently used air sampler.

### Functionalized chromatographic supports

In the field of chromatography, columns are constituted by adsorbent or absorbent materials (stationary phases), on which several mobile phases such as, for example aqueous solvents, organic solvents, gases flow. Choosing appropriate stationary and mobile phases allows to selectively retain or elute the different compounds. Stationary phases made of functionalized silica microspheres are known. In particular, functionalization by silylating agents of siliceous materials is known.

The general reaction is as follows:

n -Si-OH + Xₙ-SiRₘ → -(Si-O)ₙSiRₘ + n HX

where -Si-OH is a silanol of the surface, -(Si-O)- is the functionalized fraction of the surface, X is the leaving group, R means other groups bonded to the silicon atom, n and m are integers wherein n+m=4, n>0, m>0.

The most used leaving groups are halides (-Cl, -Br etc.), alkoxy (-OCH₃, -OCH₂CH₃ etc.), which are left as hydrogen halides (HCl, HBr etc.) and alcohols (CH₃OH, CH₃CH₂OH etc.) respectively.

A silylating agent may contain from one to three leaving groups, and according to this number may form from one to three bonds with the siliceous surface, on condition that the surface concentration of silanols allows it.

Silanization of silica microspheres is used for the construction of stationary phases for chromatography, as those used in high performance liquid chromatography (HPLC).

For example, US patent N. 3002823 discloses a gel chromatography method on silica gel for separating compounds having different molecular weights in aqueous phase, by using an uncharged granular gel consisting of a tridimensional network of molecules bonded to aliphatic radicals with from 3 to 10 carbon atoms, with a content of -OH groups of at least 12% of dry weight of the gel obtained from polymerization of uncharged hydroxylated organic substances with halogenated or epoxy organic substances. US Patent N. 4118316 discloses a method of gel chromatography for separating compounds having different molecular weight, by means of porous silica supports functionalized and silylised with quaternary ammonium groups. US Patent N. 4539399 discloses a silica gel functionalized with cyclodextrins by a chemical bond with silanols, to be used for thin layer chromatography, liquid chromatography and high performance liquid chromatography (HPLC).

US Patent N. 5221447 discloses capillary surfaces containing silica, like quartz or silica capillaries used in capillary electrophoresis, activated by a bonding agent so that silanols form Si-O-Si bonds and end with acrylic and vinyl groups. Said surfaces are reacted with a hydrophilic polymer such as methylcellulose, poly(vinyl)alcohol, dextran, starch and agarose, to form a hydrophilic polymeric coating.

Ya-Show Chen, Chao-Shuan Chang, Shing-Yi Suen, 2007, Journal of Membrane Science, "Protein adsorption separation using glass fiber membranes modified with short-chain organosilicon derivatives" , Volume 305, Issues 1-2, pages 25-135 discloses porous glass fiber membranes modified with silanization agents to prepare hydrophobic membranes to be used in the chromatographic separation of proteins, wherein the silanization agents are octyltriethoxysilane, octyldimethylchlorosilane, butyltrichlorosilane and buthyldimethylchlorosilane, thus obtaining membranes are derivatized with octyl, buthyl and methyl groups.

The prior art documents Urbe I, Ruana J., 1997, J Chromatogr A.;"Application of solid-phase extraction discs with a glass fiber matrix to fast determination of polycyclic aromatic hydrocarbons in water", 778(1-2) :337-45*,* US2003/209146 and Ya-Show Chen, Chao-Shuan Chang, Shing-Yi Suen, 2007, Journal of Membrane Science, "Protein adsorption separation using glass fiber membranes modified with short-chain organosilicon derivatives" , Volume 305, Issues 1-2, pages 25-135 may be considered as the prior art closest to the present invention.

The present invention differs from US2003/209146 and Urbe et al, 1997 because the filter obtained is made only of silanized fibers and does not comprise silanized silica particles.

The present invention differs from *Ya-Show Chen et al, 2007,* because the fibers are not grafted with a generic and non-specific hydrophobic moiety, but they are grafted with groups chosen in order to specifically retain the desired analytes.

Guo et al., "Modified glass fiber membrane and its application to membrane affinity chromatography",Journal of Membrane Science, Elsevier Scientific Publ.Company. Amsterdam, NL, vol. 215, no. 1- ' 2, 15 April 2003, 141-155, discloses a method for preparing membranes containing trypsin and papain immobilized as affinity ligands on the glass fiber involving pretreatment of fibers by soaking in a solution of K₂CO₃ and rinsing with distilled water, followed by treatment with a mixture of sulfuric acid with peroxide solution and washed with water; Intermediate silylation with glycidoxypropyltrimethoxysilane or aminopropyltriethoxysilane, treatment with succinic anhydride to introduce carbonyl groups or 1,4-phenylenediamine for introducing alanine moieties or glutaraldehyde to link trypsin or papain.

Chen et al., "Protein adsorption separation using glass fiber membranes modified with short-chain organosilicon derivatives", Journal Of Membrane Science, Elsevier, Scientific Publ.Company.Amsterdam, NL, vol.305, no.1-2, 6 October 2007, 125-135, discloses the modification of porous glass fiber membranes modified with short-chain organo-silicon derivatives wherein prior to the reaction with the organo-silicon derivatives the glass fiber is treated with a so-called piranha solution which is strongly acidic being of (H₂SO₄H₂O₂ 7:3).

Celia D. KELLER et al., "Collection of airborne polycyclic aromatic hydrocarbons and other organics with a glass fiber filter-polyurethane foam system", Atmospheric Environment (1967), vol. 18, no. 1 January 1984, 837-845 air sampling wherein the filter undegoes to a step of weighing for the determination of suspended particulate matter.

WO2008/021161 discloses filter media of glass micro-fibers the surface of which is silanized with e.g.dimethylvinylchlorosilane, phenyltrichlorosilane, phenylmethyldichlorosilane, diphenyldichlorosilane, chloropropyltrimethoxysilane, chloropropylmethyldimethoxysilane, chloroisobutylmethyldimethoxysilane, phenyltrimethoxysilane, phenyltriethyoxysilane, phenylmethyldimethoxysilane, triphenylsilanol, vinyltriethoxysilane, vinyltriacetoxysilane, methlyvinylmethoxysilane, allyltrimethoxysilane or hexenyltrimethoxysilane, which lead to a silanization with a (Si-O)nSiRm group where R is a moiety comprising at least an halogenated alkyl, an alkene or an aromatic ring and the use of said filter media for the removal of (particle) contaminants from a continuous liquid stream.

### Technical problem

It is self-evident that are not currently available filtering systems capable of simultaneously retain organic compounds from liquid and aeriform matrices in order to obtain an environmental sampling with high efficiency.

The present inventors have surprisingly developed filtering systems capable of retaining semivolatile organic compounds from aeriform matrices together with particulate matter, or organic compounds from liquid matrices. The filtering systems show improved performances, because they have a high sampling efficiency even with high fluxes of sampled fluid: so that it is possible to sample with higher flow rates, therefore reducing the limit of detection for a given sampling time, or reducing the sampling time for a given limit of detection.

For example, it is possible to sample polycyclic aromatic hydrocarbon in less than 24 hours with a flux of sampled air (linear speed) higher than 0.3 m/s.

Although at first sight it may seem possible to compare stationary phases employed in chromatographic columns with the filtering systems obtained in this invention, as for example the stationary phases of chromatographic columns with the organic group which filters are functionalized with, there are some marked differences, which do not allow to apply the knowledge in the field of chromatography to the field of filtering systems employed in the field of environmental sampling of the present invention.

The aim of sampling is to collect a fraction of the matrix to be analysed, thus the obtained sample should be homogeneous and representative of the matrix from which it was sampled. In the case of fluid matrices, it is possible to sample the whole matrix or to sample only one analyte in an enrichment system. The sampling of the analyte in the enrichment system also requires the measurement or the estimate of the sampled volume, but is the only one available for the analytes present at low concentrations. Alternatively, it would be necessary to sample enormous volumes of matrix in order to reach the limit of detection. The sampling of the analyte on the enrichment system can be both passive or active: in the first case, the analyte reaches the enrichment system by diffusion, in the second case by means of pumps. In case of very diluted analytes, it is necessary to sample large volumes of matrix in order to exceed the limit of quantification (LOQ): in these cases, in order to sample in reasonably short times, i.e. from 24 to 300 hours, in practice it is compulsory to use an active sampling on an enrichment system, also known as capitation system. An ideal enrichment system totally retains the analyte and leaves out the remaining matrix; a real enrichment system retains a good fraction of analyte together with the other compounds of the matrix (interfering agents). The efficiency of an enrichment system is defined as the ratio between the amount of the retained analyte and the total amount of analyte which passes through it. The capacity of an enrichment system is defined as the maximum amount of analyte which it can retain before it saturates and loses/changes its efficiency.

Therefore, the obtained sample is constituted by the enrichment system with analyte and interfering agents, and the value of sampled volume is associated to it. The analyte is extracted from the sample by a mixture of solvents selected so that the maximum amount of analyte and the minimum amount of interfering agents are extracted. It may be necessary to further purify the sample before proceeding with the analysis.

An alternative to extraction with solvents is the thermal desorption when the analyte is enough volatile, the enthalpy of desorption is less than the energy necessary to degrade the analyte, and interfering agents are less volatile or absent.

Unlike sampling, to which the present invention refers to, chromatography can be defined as the physicochemical phenomenon whereby the individual components of a mixture are separated thanks to their different partitioning between a stationary phase and a mobile phase. During chromatography, each compound is distributed between the two phases with its own characteristic distribution ratio, depending on the different affinity for the two phases; consequently, the volume of mobile phase required to elute a compound, i.e. to make it reach the end of the stationary phase, is a characteristic of the compound itself and is defined retention volume. Similarly, the time in which the compound is eluted is defined as retention time. The aim of chromatography, in the separation and purification of the compounds present in very low quantities and/or concentrations in a sample (analytical chemistry), is to separately elute all the compounds of interest, with the maximum separation between them and the minimum possible retention volume/time.

Conversely, the aim of sampling, to which the present invention refers to, is that the elution of the analyte takes place with the maximum possible retention volume/time.

The person skilled in the art could not have found the solution of the technical problem of the present invention in the field of chromatography, because the aim of chromatography is to separately elute compounds with maximum separation between them and minimum retention volume/time for the purposes of separation and purification of the mixture and not, as in the present invention, to elute the analyte with a maximum retention volume/time in order to sample the analyzed matrix. Therefore, the person skilled in the art could not find any suggestion on how to modify the filter systems known in the art on the basis of knowledge of chromatography, because although the field of chromatography seems apparently close, it does not refer to the technical problem characterizing the systems for environmental sampling. Therefore, the skilled person could not have had a reasonable expectation of success in obtaining a filter capable of retaining compounds both from the solid matrix and from the fluid matrix, by modifying the silica fiber filters by functionalization.

The filtering systems obtained in the present invention differ from the stationary phases used in chromatography columns because they are not functionalized flat surfaces, spherical or capillary, but they are fibers so to obtain filters capable of retaining the organic compounds from mixed phases.

The process of functionalization known in the field of chromatography for flat surfaces cannot be merely applied on a fiber, since in chromatography this process aims primarily to keep as much as possible regular surfaces, so as not to lose resolution of the chromatographic peak. Conversely, the aim of the derivatization of the sampling system of the present invention is to bind to the fibers the maximum possible quantity of organic groups, because said fibers, which constitute the filter, show a decreased ability to react, compared to common supports for chromatography columns.

Therefore, the same inventors have modified and implemented the functionalization reaction in order to allow the fibers to react more effectively and in order to bind the maximum possible quantity of organic groups.

Unlike functionalization of chromatographic columns, wherein the surface is activated with acids, in the present invention the quartz fibers were activated with suitable alkali reactants, in order to increase the surface concentration of silanols, before functionalization of the same fibers with the appropriate organic groups.

Also the selection of the organic groups in the functionalization reaction is based on different criteria compared to what happens in chromatography.

In fact, while in chromatography groups are selected in order to allow the separation of the analytes in the shortest time (volume of eluent), in the case of the present invention the organic group with which the fibers are functionalized is selected on the basis of the ability to retain as much as possible all analytes.

### Object of the invention

It is an object of the present invention to provide a process for the preparation of a filtering system according to claim 1.

Further features of the invention will be clear from the following detailed description with reference to experimental examples and attached figures.

### Short description of figures

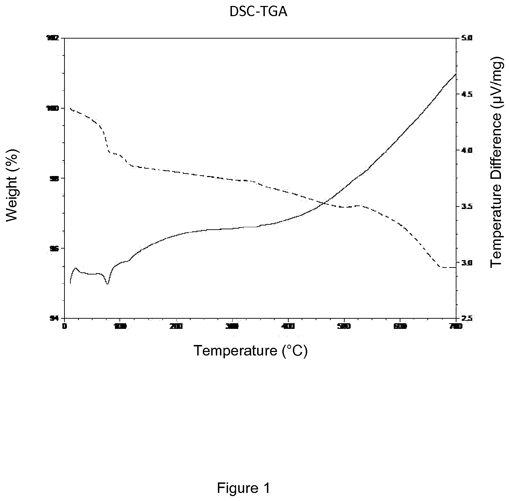

Figure 1 shows the simultaneous differential thermal analysis and thermogravimetry of an untreated filter. The analysis was performed with a speed of 5 degrees per minute, in air, with a calorimeter/thermobalance SDT Q600, produced by TA Instrument. The dashed line represents the change of weight as a percentage in function of temperature. The continuous line identifies the temperature difference measured.

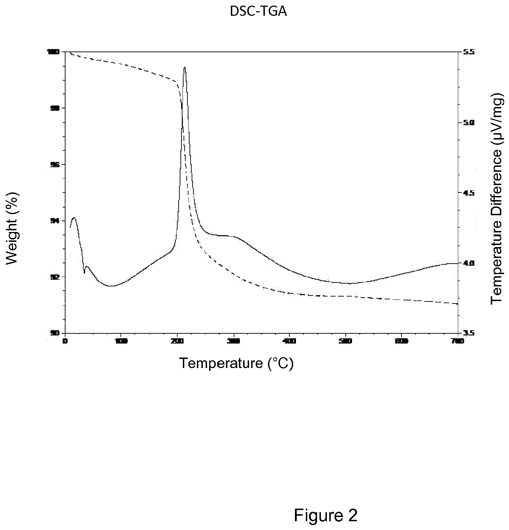

Figure 2 shows the simultaneous differential thermal analysis and thermogravimetry of a filter treated with phenyltrietoxysilane. The analysis was performed with a speed of 5 degrees per minute, in air, with a calorimeter/thermobalance SDT Q600, produced by TA Instrument. The dashed line represents the change of weight as a percentage in function of temperature. The continuous line identifies the temperature difference measured. At about 225 °C, the rapid weight loss associated with a calorimetric peak is due to oxidation of phenyls covalently bound to the surface.

### Detailed description of the invention

### Definitions

Within the content of the present invention, silanization (or functionalization) means the process allowing to bind to the hydroxyl groups on the surface of the fiber the organic groups R able to retain the analytes to be sampled from gaseous and liquid matrices by means of a covalent bond of Si-O-Si-Rₘ type, wherein - (Si-O) - is the fraction of functionalized surface. The reaction takes place by means of a derivative of silicon (silylating agent) Xₙ-SiRₘ, containing from one to three leaving groups X, for example alkoxy or halide, while the R groups remain bound to the fiber. The meaning of R depends on the analyte in the liquid or gaseous matrices to be sampled.

Within the content of the present invention silylating or functionalizing agent means as a compound of the Xₙ-SiRₘ type wherein n and m are integers and n + m = 4, n > 0, m > 0, reacting with the surface of the fiber to obtain the covalent bond between the surface of the fiber and the organic group capable of retaining analytes in the liquid or gaseous matrices to be sampled, wherein the silylating agent is a derivative of silicon containing n outgoing groups X, and m organic groups R, remaining bound to the fiber.

In the compound with general formula (I)
XₙSiRₘ (n+m=4, n>0, m>0)
R is an organic groups capable of retaining the analytes from gaseous and liquid matrices to be sampled, bound to the central atom of silicon of the silylating agent, and remaining bound to it even after the silanisation reaction.

According to the invention, R, equal or different, is hydrogen or a moiety comprising at least one halogenated alkyl or halogenated or non-halogenated alkene and/or at least one halogenated or non-halogenated aromatic ring and/or at least one nitrile.

Not necessarily according to the invention, R, equal or different, is selected from the group comprising: hydrogen, linear, branched, cyclic and polycyclic alkanes, cumulative conjugated and unconjugated alkenes, cumulative conjugated and unconjugated polyenes, aromatic rings, polyaromatic rings, alkyl vinyl alkynyl aryl acyl halides, moieties containing a bond between a carbon atom and a halogen, primary secondary tertiary and cyclic non-cyclic aromatic non-aromatic amines and their salts, alkylammonium salts, haloamines (i.e. amines in which the nitrogen atom is bonded to a halogen), primary secondary tertiary amides and their salts, lactams, nitriles (i.e. moieties containing the -CN group), alcohols comprising vinyl alcohols although considered as tautomers of ketones and alkynyl alcohols, polyols comprising geminal and non-geminal diols and geminal and non-geminal triols, phenols, polyphenols, ethers, aldehydes, ketones, anhydrides, esters, lactones, carboxylic acids and their salts, polycarboxylic and their salts.

Merely as an example, R may be -CH₂-Sn-C₆H₆, - (COO⁻ Zn^{++ -}OOC)-, diketones, diols, polyols, acetals, polyphosphates, cyanohydrin, - CH₂CH₂-COO-CH₂CH₂-SO₃, nitrosamines, hemiacetals.

X is a leaving group bonded to the central silicon of the silylating agent, that under appropriate conditions is separated from it, allowing the formation of a bond between the central atom of silicon of the silylating agent and the oxygen atom of the silanol of the surface of the filter.

The leaving groups X equal or different, are, according to the invention, selected from the group comprising: halide or alkoxy or phenol or allyl or carboxy or silyl or siloxy or alkylthiol or phenylthiol or sulphate or 2-pyridine or 1-imidazole or amino or N-amide or O-amide or azide.

Preferably the leaving groups X equal or different, are halide or alkoxy.

The filters of siliceous material may be selected from the group including quartz fiber filters, glass fiber filters, filters of sintered silica, preferably quartz fiber.

The fibers of the filters retain the particulate matter, and the filters are characterized by a percentage of retention of the powders with diameter greater than 0.3 µm higher than 80%, preferably higher than 99.98%.

Within the meaning of the present invention the value percentage of retention of the powders with diameter greater than a certain diameter is evaluated by means the method of the America Society for Testing and Material ASTM D 2986-91 and the European Method EN 1822.

Their thickness is in the range between 0.01 and 50 mm, preferably between 0.2 and 2 millimeters.

The filters have an area from 0.1 cm² to 2500 cm, preferably from 15 to 750 cm².

Preferably the filters are quartz fiber filters.

The filters made of fibers of siliceous material are functionalized on hydroxyl groups of the surface with organic groups R by means of a covalent bond of the type Si-O-Si-Rₘ, wherein -(Si-O)- is the fraction of surface functionality and R is an organic group capable of retaining the analytes present in the liquid or gaseous matrix to be sampled, preferably R is as previously defined.

The organic compounds which can be sampled are all the classes of compounds of interest for analytical chemistry, for example polycyclic aromatic hydrocarbons, polychlorinated biphenyls, polychlorinated dibenzo-para-dioxins and dibenzofurans, chlorobenzenes, alkylbenzenes, alkanes, esters of phthalic acids, polybrominated diphenyl ethers, perfluoroalkyl substances, drugs, active substances, metabolites.

Merely as an example, for the sampling of aromatic compounds R may be phenyl, for the sampling of alkanes R may be octyl or octadecyl, for the sampling of amines R may be carboxyl or sulfonic acid, for the sampling of phthalates R may be alkylamine.

In one embodiment, the filtering system is a quartz fiber filter with diameter 47 mm, thickness 1 mm, percentage of retention of the powders having a diameter greater than 0.3 µm higher than 99.98%, and the fibers are functionalized with phenyls.

The process for the preparation of the filters provides that they may are purified from organic impurities with commonly used methods wherein the most appropriate can be easily chosen by the person skilled in the field and treated in such a way as to maximize the surface concentration of free silanols, by treatment with an appropriate basic reagent. The so activated filters are then dehydrated, preferably by subsequent dives in appropriate dehydrating agents, or mixture thereof.

The basic reactive used to treat the fibers so as to hydrolyze the maximum number of siloxane bridges to free silanols are selected from the group comprising solutions of NH₃, NaOH, KOH, LiOH Ca(OH)₂, Be (OH)₂, Mg (OH)₂, Sr (OH)₂, Ba (OH)₂, carbonates and bicarbonates of alkali and alkaline-earth metals, sulfites and bisulfites of alkali and alkaline-earth metals, phosphates of alkali and alkaline-earth metals, hypochlorites and chlorites of alkali and alkaline-earth metals, CH₃O⁻Na⁺, CH₃O⁻K⁺, (CH₃O⁻)₂Ca⁺⁺, CH₃CH₂O⁻Na⁺, CH₃CH₂O⁻K⁺, (CH₃CH₂O⁻)₂Ca⁺⁺, organic amines, and mixtures thereof; preferably the alkaline reagent is a solution of NaOH. The dehydrating agents may be appropriately selected by a person with ordinary skills in the field from the commonly used organic solvents, merely as an example they can be selected from the group comprising anhydrous methanol, anhydrous ethanol, anhydrous 1-propanol, anhydrous 2-propanol, anhydrous acetone, anhydrous N-Dimethylformaldehyde, anhydrous ethyl acetate, anhydrous chloromethane, anhydrous dichloromethane, anhydrous chloroform, anhydrous tetrachloromethane, anhydrous toluene, anhydrous xylenes, anhydrous pentane, anhydrous cyclopentane, anhydrous hexane, heptane, anhydrous cyclohexane, anhydrous isooctane, anhydrous nonane, anhydrous pyridine, anhydrous tetrahydrofuran. Then, the filters are treated with the silylating or functionalizing agent selected according to the classes of compounds to be sampled.

Within the content of the present invention, silylating agent or functionalizing agent means the compound of XₙSiRₘ type wherein n and m are integers and n + m = 4, n > 0, m > 0 and R has the meaning as previously described.

The treatment conditions with the silylating or functionalizing agent depend on the selected agent.

The selected reaction solvent should not interfere with the reaction and has, according to the invention, a boiling temperature (T_{eb}) equal to or greater than the reaction temperature, preferably T_{eb} is greater than or equal to 80 ° C.

The person with ordinary skills a in the field is able to select the suitable reaction solvent among those known in the art, merely as an example the solvent may be toluene or isooctane or nonane or pyridine or tetrahydrofuran or xylenes.

The reaction can be catalyzed by temperature, the reaction temperature is between room temperature and the boiling temperature of the silylating agent or of the solvent, preferably the temperature is 80 ° C.

According to the invention, the reaction is catalyzed by irradiation with ionizing radiation such as gamma rays, X-rays, ultraviolet C radiation, ultraviolet B radiation, preferably gamma rays.

According to the invention, the treatment with the silylating agent or functionalizing agent may be carried out by immersion in a solution of the same or by depositing on the filter of the vapors of the heated functionalizing agent.

In the case of the silanization, treatment is preferably carried out by immersion in a solution of it, as silylating compounds are easily flammable below their boiling temperature.

After functionalization, the filters are cleaned by the excess of silylating agent with a solvent capable of solubilizing the silylating agent used, and are ready to sample organic compounds.

For example, if the silylating agent is triethoxyphenylsilane, the solvent may be ethyl acetate, dichloromethane, toluene, xylenes or pyridine.

In one embodiment of the present invention, the filters were purified from organic impurities by heating at 400 °C for 48 hours, and were activated by immersion in an aqueous solution of 0.2 M NaOH for 24 hours at room temperature. The activated filters were cleaned and dehydrated by successive immersions in distilled water, anhydrous acetone and anhydrous toluene, and were immersed for 24 hours in solutions of toluene and phenyltriethoxysilane (silylating agent) 95:5, at a temperature of 80 ° C, using as an activator of the reaction a gamma ray source (cobalt 60). After derivatization, the filters have been cleaned for subsequent dives in toluene, acetone and water.

The so obtained filters are inserted into a sampler that, by means of a suction pump, determines a controlled air flow(vapors and particulate matter) on the filter. The structure of filters allows to retain the particulate matter, on which is present a fraction of the organic compounds, while the groups added with the derivatization allow to adsorb the fraction present in the vapor phase: it is therefore possible to sample on a single support the totality of the compound considered.

The analytes can be extracted from the filter with the common extraction techniques, and then it is possible to proceed to quantification.

Extraction can be carried out by means of appropriate solvent or by thermal desorption.

Before analysis it is possible to weigh the filter to determine the total quantity of particulate matter.

For example, prior to the operation of weighing, the disks are confined for 48 hours in an environment with controlled temperature and humidity (25 °C, 50% relative humidity); generally each weighing is repeated five times.

The functionalized filters of quartz or glass allow a better determination of the weight, compared to the filters of quartz or glass not treated. In fact the treatment of derivatization of the hydroxyl groups makes the filter less hygroscopic. This translates into a smaller change in weight of the filter during operation of gravimetric determination.

The functionalized filters may also be used for the sampling of organic compounds in liquid matrices, by flowing the sample on the filter, which retains the organic compounds letting pass the rest of the liquid. Subsequently, with a suitable solvent or by thermal desorption, the organic compounds are selectively eluted from the filter and can be analyzed.

For example, a functionalized quartz fiber filter with a diameter 47 mm, thickness 2 mm, percentage of retention of powder equal to 99,98%, has been inserted into a sampler with a flow rate of sampling of 38.33 L/min in order to sample atmospheric air pollutants: naphthalene, acenaphtylene, acenaphthene, fluorene, phenanthrene, anthracene, fluoranthene, pyrene, benzo(a)anthracene, chrysene, benzo(b+j+k)fluoranthene, benzo(e)pyrene, benzo(a)pyrene, perylene, indeno(1,2,3,c,d)pyrene, dibenzo(a,h)anthracene, benzo(g,h,i)perylene.

The present invention is further illustrated by the following non-limitative examples.

### Examples

### Example 1

The optimal conditions for binding to filters the best amount of organic substance have been identified. It was evaluated the effect of pre-treatment with acids and/or bases at different concentrations (HCl and/or NaOH at increasing concentrations from 0.1 to 2 M) and temperatures to increase the availability of free silanoiles.

Reaction conditions have been optimized: concentration (from 1% to 5%), time (from 12 to 48 hours) and temperature (25 or 80 ° C). In Table 1 the increases in weight obtained with the silylating agent phenyltriethoxysilane in toluene are shown.

**Table 1**

| Reaction condition Time (hours) Temperature (°C) | % increase in weight |
|---|---|
| 12 hours 25 °C | 2,9% |
| 24 hours 25 °C | 4,1% |
| 48 hours 25 °C | 4,2% |
| 12 hours 80 °C | 5,8% |
| 24 hours 80 °C | 6,2% |
| 48 hours 80 °C | 6,3% |

The temperature has a significant effect on the reaction and the best results are obtained when the reaction takes place at 80 ° C

The reaction solvent must not interfere with the reaction and have a boiling temperature equal to or greater than 80 ° C.

Among the commonly used solvents not interfering with the reaction, toluene has a suitable boiling temperature and then has been chosen as the reaction solvent. Other high-boiling solvents are available, such as nonane or pyridine, but are more expensive and risky. Furthermore, it has been experimentally observed that many silylating agents not solubilize in nonane because it is too apolar. Furthermore it is known that the toxicity of pyridine is greater than that of the other solvents indicated.

The use of gamma rays as an alternative reaction activator has been also evaluated, by using a source of Cobalt 60. The results obtained are shown in the following Table 2.

**Table 2**

| Intensity of gamma ray irradiation, and solvent | % increase in weight |
|---|---|
| 50 kGray in toluene | 6,6% |
| 50 kGray in hexane | 7,1% |
| 200 kGray in toluene | 6,8% |
| 200 kGray in hexane | 7,5% |

The derivatized filters were characterized with thermogravimetry and differential thermal analysis.

The silanized filters were used to sample polycyclic aromatic hydrocarbons in ambient air, obtaining recoveries higher than those of untreated filters, and comparable to those of the filter/absorbent systems, currently used.

The sampling was performed on Skypost PM HV (Tecora) at a flow rate of 38.33 L / min. Downstream of the filter (silanized or not) was placed a cartridge of polyurethane foam to collect the fraction of analyte lost from the filters. The ratio of analyte collected on the filter and analyte collected on the cartridge provides the efficiency per cent, as shown in Table 3 below.

**Table 3**

| | Efficiency % of untreated filters | Efficiency % of treated filters |
|---|---|---|
| Acenaphthylene | 5 | 30 |
| Acenaphthene | 28 | 41 |
| Fluorene | 5 | 56 |
| Phenanthrene | 5 | 51 |
| Anthracene | 4 | 42 |
| Fluoranthene | 19 | 29 |
| Pyrene | 35 | 66 |
| Benzo(a)anthracen e | 71 | 62 |
| Chrisene | 85 | 81 |
| Benzo(b+j+k)fluor anthene | 98 | 95 |
| Benzo(e)pyrene | 95 | 96 |
| Benzo(a)pyrene | 87 | 98 |
| Perylene | 96 | 98 |
| Indeno(1,2,3,c,d) pyrene | 100 | 97 |
| Dibenzo(a,h)anthr acene | 96 | 95 |
| Benzo(g,h,i)peryl ene | 93 | 92 |

Specifically, filters in quartz fiber with a diameter of 47 and 100 millimeters provided from Munktel™ and filters in quartz wool 50 millimeter (Horizon TechnologyTM) have been used. The filters were purified from organic impurities by heating at 400 ° C for 48 hours, and activated by immersion in an aqueous solution of 0.2 M NaOH for 24 hours at room temperature. The filters in quartz wool 50 mm (Atlantics) were discarded because they could not stand the pre-treatment. The activated filters were cleaned and dehydrated by successive immersions in distilled water, anhydrous acetone and toluene, and were immersed for 24 hours in solutions of toluene and silylating agent (95:5), at a temperature of 80 ° C. The silylation agents used are phenyltriethoxysilane, phenyltrichlorosilane, octadecyltrichlorosilane (comparative), chlorodimethyloctadecylsilane (comparative), chlorotrimethylsilane (comparative), and 4-aminopropyltriethoxysilane (comparative).

The phenyltriethoxysilane gave the best results for the sampling of polycyclic aromatic hydrocarbons (naphthalene, acenaphthylene, Acenaphthene, fluorene, Phenanthrene, anthracene, fluoranthene, pyrene, benzo(a)anthracene, chrysene, benzo(b+j+k) fluoranthene, benzo(e) pyrene, benzo (a) pyrene, Perylene, indeno(1,2,3,c,d)pyrene, dibenzo(a,h)anthracene, benzo(g,h,I,perylene, as shown in the following table 4.

**Table 4**

| Silylating agent | Average % efficiency |
|---|---|
| phenyltriethoxysilane | 71% |
| phenyltrichlorosilane | 65% |
| octadecyltrichlorosilane | 68% |
| chlorodimethyloctadecylsilane | 62% |
| chlorotrimethylsilane | 20% |
| 4-aminopropyltriethoxysilane | 47% |

After functionalization, the filters have been cleaned for subsequent dives in toluene, acetone and water. The filters obtained in this way were characterized and then used for sampling pollutants.

Figure 1 shows the simultaneous differential thermal analysis and thermogravimetry of a filter untreated. The analysis was performed with a speed of 5 degrees per minute, in air, with a calorimeter/thermobalance SDT Q600, produced by TA Instrument. The dashed line represents the change of weight as a percentage in function of temperature. The continuous line identifies the temperature difference measured.

Figure 2 shows the simultaneous differential thermal analysis and thermogravimetry of a filter treated with phenyltrietoxysilane. The analysis was performed with a speed of 5 degrees per minute, in air, with a calorimeter/thermobalance SDT Q600, produced by TA Instrument. The dashed line represents the change of weight as a percentage in function of temperature. The continuous line identifies the temperature difference measured. At about 225 °C, the rapid weight loss associated with a calorimetric peak is due to oxidation of phenyls covalently bound to the surface.

Afterwards, the need of an acid treatment subsequent or alternative to the basic one has been investigated. The obtained results indicate that, for this type of support, the basic treatment is required while the acid one is unnecessary or harmful. The following Table 5 shows the percent increases in weight of the filters (Munktell 47 mm) in function of the type of activation treatment of the surface. Subsequently, the filters were dried and silanized with phenyltriethoxysilane.

**Table 5**

| None treatment. | Treatment with HCl 0,5 M for 24 hours | Treatment with NaOH 0,5 M for 24 hours | Treatment with NaOH 0,5 M for 24 hours, followed by HCl 0,5 M for 24 hours |
|---|---|---|---|
| 0,7% | 1,2% | 6,2% | 2,8% |

After having selected a basic treatment, the concentration of sodium hydroxide and the immersion time has been optimized, for the particular case of filters considered, always considering the percent increase in weight with phenyltriethoxysilane, as shown in Tables 6 and 7.

**Table 6**

| NaOH 0,1 M for 24 hours | NaOH 0,2 M for 24 hours | NaOH 0,5 M for 24 hours | NaOH 1 M for 24 hours |
|---|---|---|---|
| 5,1% | 6,2% | 6,3% | 6,3% |

**Table 7**

| NaOH 0,2 M for 12 hours | NaOH 0,2 M for 24 hours | NaOH 0,2 M for 48 hours |
|---|---|---|
| 5,9% | 6,2% | 6,4% |

It has been chosen to operate with 0.2 M NaOH for 24 hours. Furthermore, the possibility of the silanisation reaction to occur by irradiation with ionizing radiation has been also investigated, by immersing the activated and cleaned filters in solutions of silylating agent 5% in hexane or toluene and irradiating with gamma rays at doses of 50 and 200 kGy.

The obtained results are shown in Table 8:

**Table 8**

| Intensity of gamma ray and solvent | % increase in weight |
|---|---|
| 50 kGray in toluene | 6,6% |
| 50 kGray in hexane | 7,1% |
| 200 kGray in toluene | 6,8% |
| 200 kGray in hexane | 7,5% |

### Example 2

The filters of Example 1 have been used for sampling.

For the sampling, samplers Skypost PM HV (Tecora) have been used. The flow rates of sampling were placed at 38.33 L/min, and a sampling head has been used in order to select the PM₁₀.

At least 24 hours before the extraction with solvent, the filters were marked with an extraction/purification standard, for example with 25 ng of perdeuterated PAHs (PAH-ES Crescent). An accelerated solvent extraction has been performed with an ASE 200 (Dionex). The sample was preheated to 100 °C and 2000 psi. The extraction solvent (dichloromethane:acetone=80:20) was added to the cell containing the sample and maintained at 100 °C and 2000 psi for 5 minutes, and then was collected. The extraction was repeated for other 4 cycles.

The extract of about 40 mL was concentrated up to 5 mL through the use of a waterbath at 40 °C under a stream of nitrogen. The extract was purified. In our case, we used an automated system based on gel permeation AccuPrep MPS™ & AccuVap Inline™ (J2 Scientific, USA) characterized by:
Column: 45 cm, internal diameter 2 cm.

Resin: Bio-Beads S-X3 (Bio-Rad Laboratories, USA), 200-400 mesh, PM (exclusion limit) 2.000, PM (operating range) from 2.000 to 100 Mobile phase: Dichloromethane (Romil, UK); Application: High purity process solvent (Assay> 99.9% * Water <0.01% Residue <0.0005%) Flow rate of mobile phase: 5 mL/min Loaded sample volume: 5 mL

### Method used:

Dump: 18.5 min
Collect: 9.5 min
Wash: 5 min
The purified sample was concentrated by AccuVap and resumed with a hexane solution with 1% of nonane. At this point the standard syringe was added, 20 ng of perdeuterated benzo(e)pyrene and perdeuterated chrysene (PAH-IS, Crescent). Subsequently the GC / MS analysis was performed. For the instrumental analysis, an Ultra Trace GC coupled to a triple quadrupole TSQ (Termofisher) has been employed, using the following parameters:
Meta.XLB chromatographic column (TR-330262-Teknokroma) 0.25 mm x 60m with 0.25 µm phase, 1.0 ml / min flow of He in splitless mode for 1 minute at 280 ° C.

### GC Ramp:

60 °C for one minute
20 ° / min up to 250 ° C, maintained for 10 minutes.
15 ° / min up to 300 ° C, maintained for 15 minutes.
5 ° / min up to 325 ° C, maintained for 10 minutes.

Acquisition windows of the TSQ (Q3 MS) :
from 8.5 minutes to 2.5 minutes: 128.1, 136.1
from 11 minutes to 2.5 minutes: 152.1, 154.1, 160.1, 164.1, 166.1, 176.1
from 13.5 minutes to 2.5 minutes: 178.1, 188.1;
from 16 minutes to 9.5 minutes: 202.1, 212.1;
from 25.5 minutes to 2.5 minutes: 228.1, 240.1;
from 28 minutes to 12 minutes: 252.1, 264.1;
from 40 minutes to 14 minutes: 276.1, 278.1, 288.1, 292.1.

The results obtained are shown in Table 9.

**Table 9**

| | Concentration in air (ng/Nm³) |
|---|---|
| Naftalene | 0,61 |
| Acenaphthylene | 0,08 |
| Acenaphthene | 0,12 |
| Fluorene | 0,15 |
| Phenanthrene | 0,18 |
| Anthracene | 0,12 |
| Fluoranthene | 0,23 |
| Pyrene | 0,18 |
| Benzo(a)anthracene | 0,11 |
| Chrisene | 0,32 |
| Benzo(b+j+k)fluoranthene | 0,47 |
| Benzo(e)pyrene | 0,34 |
| Benzo(a)pyrene | 0,18 |
| Perylene | 0,08 |
| Indeno(1,2,3,c,d)pyrene | 0,52 |
| Dibenzo(a,h)anthracene | 0,63 |
| Benzo(g,h,i)perylene | 0,54 |

The inventors did not performed a direct comparison on sampling with the filters of the present invention and those known in the art (ENVIdisk™, Empore™ disks, Atlantic SPE disk™) because the filters known in the art cannot be used in sampling with a flow rate of 38.33 L / min, used in the sampler. Sampling at a different flow rate, in addition to losing the aerodynamic cutting would provide not comparable results because the sampling efficiency is a function of the linear speed (flow rate per surface).

However, it is possible to state that none of those systems (ENVIdisk™, Empore™ disks, Atlantic SPE disk™) allows to sample the atmosphere with the common samplers.

### Example 3

The filters of Example 1 have been used for sampling in water of polychlorinated dibenzo-para-dioxins and polychlorinated dibenzofurans (PCDD/F).

A very highly PCDD/Fs contaminated sample of water was used. In this kind of liquid, the PCDD/Fs are both dissolved in the water and associated to particles suspended in the water, as well as in Example 2 the PAH were both in vapour phase and associated to suspended particles in the air. The concentration of PCDD/Fs (measured with a liquid-liquid extraction with methylene chloride in a separatory funnel, according with EPA Method 1613) in the water was the following (table 10):

**Table 10**

| Compound | Concentration (ng/L) |
|---|---|
| 2,3,7,8-TCDF | 26,4 |
| 2,3,7,8-TCDD | 28,5 |
| 1,2,3,7,8-PeCDF | 31,2 |
| 2,3,4,7,8-PeCDF | 19,7 |
| 1,2,3,7,8-PeCDD | 27,8 |
| 1,2,3,4,7,8-HxCDF | 12,6 |
| 1,2,3,6,7,8-HxCDF | 15,6 |
| 2,3,4,6,7,8-HxCDF | 15,7 |
| 1,2,3,4,7,8-HxCDD | 16,1 |
| 1,2,3,6,7,8-HxCDD | 14,1 |
| 1,2,3,7,8,9-HxCDD | 22,1 |
| 1,2,3,7,8,9-HxCDF | 18,4 |
| 1,2,3,4,6,7,8-HpCDF | 15,0 |
| 1,2,3,4,6,7,8-HpCDD | 15,5 |
| 1,2,3,4,7,8,9-HpCDF | 15,4 |
| OCDD | 44,3 |
| OCDF | 41,2 |
| Average | 22,3 |

By means of a hollow punch, filters with 10 mm diameter were obtained starting from the filters with 47 mm diameter of Example 1.

An exact volume (50 mL) of contaminated water was passed through one filter by gravity: at the end of this step, the PCDD/F were sampled and retained on the filter. Then, the PCDD/F were extracted from the filter by eluting with 10 mL of dichloromethane.

The dichloromethane with the PCB eluted was spiked with an extraction/purification standard (400 pg of Wellington™ EN-1948ES, a ¹³C-labeled PCDD/F mixture). After this step, the extracted and spiked sample was dehydrated by elution with 5 mL of dichloromethane on a cartridge made of 1 gram of anhydrous sodium sulphate. Finally, the extracted, spiked and dehydrated sample was concentrated to 200 µL and analized with high resolution gas chromatography coupled to tandem mass spectrometry, using a Ultra Trace GC™ coupled to a triple quadrupole TSQ™ (Thermo Fisher™), using the following parameters:
Meta.XLB chromatographic column (TR-330262-Teknokroma) 0.25 mm x 60m with 0.25 µm phase, 1.0 ml / min flow of He in splitless mode for 1 minute at 290 ° C.

### GC Ramp:

150 °C for 1,6 minutes
20 ° / min up to 210 ° C, maintained for zero minutes.
3 ° / min up to 275 ° C, maintained for 12 minutes.
15 ° / min up to 300 ° C, maintained for 8 minutes
15 ° / min up to 330 ° C, maintained for 8 minutes.

The mass-spectrometric detection of PCDD/F has been performed in SRM (single reaction monitoring): the loss of COCl was monitored in the triple quadrupole.

The results obtained are shown in the following table 11.

**Table 11**

| Compound | Amount (pg) | Concentration calculated (ng/L) |
|---|---|---|
| 2,3,7,8-TCDF | 293,1 | 5,9 |
| 2,3,7,8-TCDD | 366,3 | 7,3 |
| 1,2,3,7,8-PeCDF | 719,3 | 14,4 |
| 2,3,4,7,8-PeCDF | 851,6 | 17,0 |
| 1,2,3,7,8-PeCDD | 952,3 | 19,0 |
| 1,2,3,4,7,8-HxCDF | 491,4 | 9,8 |
| 1,2,3,6,7,8-HxCDF | 697,2 | 13,9 |
| 2,3,4,6,7,8-HxCDF | 731,1 | 14,6 |
| 1,2,3,4,7,8-HxCDD | 739,9 | 14,8 |
| 1,2,3,6,7,8-HxCDD | 724,5 | 14,5 |
| 1,2,3,7,8,9-HxCDD | 777,8 | 15,6 |
| 1,2,3,7,8,9-HxCDF | 719,5 | 14,4 |
| 1,2,3,4,6,7,8-HpCDF | 1367,0 | 27,3 |
| 1,2,3,4,6,7,8-HpCDD | 1399,8 | 28,0 |
| 1,2,3,4,7,8,9-HpCDF | 937,4 | 18,7 |
| OCDD | 1227,9 | 24,6 |
| OCDF | 1250,4 | 25,0 |
| Average | 838,0 | 16,8 |

The results are in good agreement with the measurement performed with the liquid-liquid extraction with methylene chloride in a separatory funnel, previously shown.

Moreover, in order to measure the sampling efficiency, the water passed through the silylated filter (supposed to be without PCDD/F) was collected and analyzed (by liquid-liquid extraction with methylene chloride in a separatory funnel). The amount of PCDD/F not retained by the silylated filter is shown in table 12, and the sampling efficiency is calculated as the ratio between the amount collected on the filter and the amount remained in the water.

**Table 12**

| Compound | Amount on the filter (pg) | Amount on the water (pg) | Sampling efficiency % |
|---|---|---|---|
| 2,3,7,8-TCDF | 293,1 | 40,3 | 87,9 |
| 2,3,7,8-TCDD | 366,3 | 35,8 | 91,1 |
| 1,2,3,7,8-PeCDF | 719,3 | 37,7 | 95,0 |
| 2,3,4,7,8-PeCDF | 851,6 | 22,8 | 97,4 |
| 1,2,3,7,8-PeCDD | 952,3 | 34,9 | 96,5 |
| 1,2,3,4,7,8-HxCDF | 491,4 | 9,2 | 98,2 |
| 1,2,3,6,7,8-HxCDF | 697,2 | 17,0 | 97,6 |
| 2,3,4,6,7,8-HxCDF | 731,1 | 17,7 | 97,6 |
| 1,2,3,4,7,8-HxCDD | 739,9 | 4,1 | 99,5 |
| 1,2,3,6,7,8-HxCDD | 724,5 | 15,1 | 98,0 |
| 1,2,3,7,8,9-HxCDD | 777,8 | 17,2 | 97,8 |
| 1,2,3,7,8,9-HxCDF | 719,5 | 16,2 | 97,8 |
| 1,2,3,4,6,7,8-HpCDF | 1367,0 | 9,8 | 99,3 |
| 1,2,3,4,6,7,8-HpCDD | 1399,8 | 11,6 | 99,2 |
| 1,2,3,4,7,8,9-HpCDF | 937,4 | 11,6 | 98,8 |
| OCDD | 1227,9 | 25,3 | 98,0 |
| OCDF | 1250,4 | 24,2 | 98,1 |
| Average | 838,0 | 20,6 | 97,6 |

### Example 4 (comparative)

Silylated filters with an aminopropylic moiety have been used in the sampling of phenols in air.

The silylated filters have been obtained from the following procedure. Glass fiber filters purchased from Whatman™ (GFF-C, 47 mm diameter) have been purified by heating at 400 °C and then activated by immersion in NaOH 0,5 M for 24 hours at room temperature. Then, the filters have been washed with water followed by anhydrous acetone followed by anhydrous toluene. After these washings, the filters have been silylated by immersion in a solution of aminopropyltrietoxysilane (5% in toluene) at 80 °C for 24 hours. The aminopropyltrietoxysilane was purchased from Sigma Aldrich™. Finally, the silylated filters have been washed with toluene and acetone.

The sampling of phenols from air has been performed on the silylated filters with a Tecora™ Skypost™ air sampler, with a flow rate of 38,33 liters per minute. A MnO₂-based ozone scrubber was used in the sampling. In order to evaluate the sampling efficiency, a back-up silylated filter was used: the two filters was then analized separately.

Phenols were extracted from the filter by sonication with a mixture of acetone and toluene (50:50) and analized by GC-MS, using a gascromatograph Ultra Trace GC™ coupled to a ion trap mass spectrometer ITQ™ (Thermo Fisher™) , using the following parameters.

Meta.XLB chromatographic column (TR-330262-Teknokroma) 0.25 mm x 60m with 0.25 µm phase, 1.5 ml / min flow of He in splitless mode for 1 minute at 250 ° C.

### GC Ramp:

150 °C for 1 minute
15 ° / min up to 170 ° C, maintained for 5 minutes.
15 ° / min up to 230 ° C, maintained for 10 minutes.
15 ° / min up to 270 ° C, maintained for 5 minutes
10 ° / min up to 300 ° C, maintained for 5 minutes.

The mass-spectrometric detection of phenols has been performed in in the ion trap using a full scan from 50 to 150 Th.

The sampling efficiency, expressed as the ratio between the amount collected on the first and on the second filter, is shown in table 13.

**Table 13**

| **Analyte** | **Sampling efficiency** |
|---|---|
| Phenol | 68% |
| Catechol | 77% |
| Resorcinol | 82% |
| Hydroquinone | 88% |
| Average | 79% |
| Resorcinol | 82% |
| Hydroquinone | 88% |
| Average | 79% |

## Claims

1. Process for the preparation of a filtering system comprising filters consisting of fibers of siliceous material silanized with the (Si-O)nSiRm group wherein -(Si-O)- is the fraction of functionalized surface and R, equal or different, is hydrogen or a moiety comprising at least one halogenated alkyl, or halogenated or non-halogenated alkene and/or at least one halogenated or non-halogenated aromatic ring and/or at least one nitrile, and n and m are integers wherein n + m = 4, n > 0, m > 0, comprising the following steps:
a) purification of a filter consisting of fibers of siliceous material;
b) treatment of the filter with a basic reactant to maximize the surface concentration of free silanol groups;
c) dehydration of the filter;
d) treatment with a silylating agent Xn-SiRm wherein n and m are integers and n + m = 4, n > 0, m > 0, X equal or different are halide or alkoxy or phenol or allyl or carboxy or silyl or siloxy or alkylthiol or phenylthiol or sulphate or 2-pyridine or 1-imidazole or amino or N-amide or O-amide or azide and R, equal or different, is hydrogen or a moiety comprising at least one halogenated alkyl or halogenated or non-halogenated alkene and/or at least one halogenated or non-halogenated aromatic ring and/or at least one nitrile, catalyzed by irradiation with ionizing radiation and carried out by immersion in a solution of the silylating agent or by depositing on the filter of the vapors of the heated silylating agent,
in the presence of a reaction solvent having a boiling temperature equal to or greater than the reaction temperature;
e) cleaning from the excess of silylating agent with a solvent.

2. Process of claim 1 wherein in step b) the basic reactant is selected from the group comprising solution of NH₃, NaOH, KOH, LiOH, Ca (OH)₂, Be(OH)₂, Mg(OH)₂, Sr(OH)₂, Ba(OH)₂, carbonates and bicarbonates of alkali and alkaline-earth metals, sulfites and bisulfites of alkali and alkaline-earth metals, phosphates of alkali and alkaline-earth metals, hypochlorites and chlorites of alkali and alkaline-earth metals, CH₃O⁻Na⁺, CH₃O⁻K⁺, (CH₃O⁻) ₂Ca⁺⁺, CH₃CH₂O⁻Na⁺, CH₃CH₂O⁻K⁺, (CH₃CH₂O⁻) ₂Ca⁺⁺, organic amines, and mixtures thereof.

3. Process of claims 1 or 2 wherein in step d) the reaction temperature is between room temperature and the boiling temperature of the silylating agent or of the reaction solvent.

4. Process of anyone of claims from 1 to 3 wherein in step d) the reaction solvent has a boiling temperature equal to or greater than the reaction temperature.

5. Process of anyone of claims from 1 to 4 wherein in step d) X, equal or different, are halide or alkoxy.

## Patentansprüche

1. Verfahren zur Herstellung eines Filterungssystems, das Filter umfasst, bestehend aus Fasern aus Siliciumdioxid-haltigem Material, silanisiert mit der (Si-O)nSiRm-Gruppe, worin -(Si-O)- die Fraktion der funktionalisierten Oberfläche ist, und R, gleich oder verschieden, Wasserstoff oder ein Rest ist, der wenigstens ein halogeniertes Alkyl oder halogeniertes oder nicht-halogeniertes Alken und/oder wenigstens einen halogenierten oder nicht-halogenierten aromatischen Ring und/oder wenigstens ein Nitril umfasst, und n und m ganze Zahlen sind, worin n + m = 4, n > 0, m > 0 ist, die folgenden Schritte umfassend:
a) Reinigen eines Filters, bestehend aus Fasern aus Siliciumdioxid-haltigem Material;
b) Behandeln des Filters mit einem basischen Reaktanten, um die Oberflächenkonzentration freier Silanolgruppen zu maximieren;
c) Dehydratisieren des Filters;
d) Behandeln mit einem Silylierungsmittel Xn-SiRm, worin n und m ganze Zahlen und n + m = 4, n > 0, m > 0 sind, X, gleich oder verschieden, Halogenid oder Alkoxy oder Phenol oder Allyl oder Carboxy oder Silyl oder Siloxy oder Alkylthiol oder Phenylthiol oder Sulfat oder 2-Pyridin oder 1-Imidazol oder Amino oder N-Amid oder O-Amid oder Azid sind, und R, gleich oder verschieden, ist Wasserstoff oder ein Rest, der wenigstens ein halogeniertes Alkyl oder halogeniertes oder nicht-halogeniertes Alken und/oder wenigstens ein halogenierter oder nicht-halogenierter aromatischer Ring und/oder wenigstens ein Nitril umfasst, katalysiert durch Bestrahlen mit ionisierender Strahlung und ausgeführt durch Tauchen in eine Lösung des Silylierungsmittels oder durch Ablagern der Dämpfe des erwärmten Silylierungsmittels auf dem Filter,
in Anwesenheit eines Reaktionslösemittels, das eine Siedetemperatur besitzt, die gleich oder größer ist als die Reaktionstemperatur;
e) Reinigen vom Überschuss des Silylierungsmittels mit einem Lösemittel.

2. Verfahren, nach Anspruch 1, worin in Schritt b) der basische Reaktant ausgewählt ist aus der Gruppe, umfassend eine Lösung von NH₃, NaOH, KOH, LiOH, Ca(OH)₂, Be(OH)₂, Mg(OH)₂, Sr(OH)₂, Ba(OH)₂, Carbonaten und Bicarbonaten von Alkali- und Erdalkalimetallen, Sulfiten und Bisulfiten von Alkali- und Erdalkalimetallen, Phosphaten von Alkali- und Erdalkalimetallen, Hypochloriten und Chloriten von Alkali- und Erdalkalimetallen, CH₃O⁻Na⁺, CH₃O⁻K⁺, (CH₃O⁻)₂Ca⁺⁺, CH₃CH₂O⁻Na⁺, CH₃CH₂O⁻K⁺, (CH₃CH₂O⁻)₂Ca⁺⁺, organischen Aminen und deren Mischungen.

3. Verfahren, nach den Ansprüchen 1 oder 2, worin in Schritt d) die Reaktionstemperatur zwischen Raumtemperatur und der Siedetemperatur des Silylierungsmittels oder des Reaktionslösemittels liegt.

4. Verfahren, nach irgendeinem der Ansprüche 1 bis 3, worin in Schritt d) das Reaktionslösemittel eine Siedetemperatur hat, die gleich oder größer ist als die Reaktionstemperatur.

5. Verfahren, nach irgendeinem der Ansprüche 1 bis 4, worin in Schritt d) X, gleich oder verschieden, Halogenid oder Alkoxy sind.

## Revendications

1. Procédé pour la préparation d'un système de filtrage comprenant des filtres consistant en des fibres de matière siliceuse salinisées avec le groupe (Si-O)nSiRm dans lequel -(Si-O)- est la fraction d'une surface fonctionnalisée et R, égal ou différent, est de l'hydrogène ou un groupe caractéristique comprenant au moins un alkyle halogéné, ou un alcène halogéné ou non halogéné et/ou au moins un noyau aromatique halogéné ou non halogéné et/ou au moins un nitrile, et n et m sont des entiers dans lesquels n + m = 4, n > 0, m > 0, comprenant les étapes suivantes :
a) la purification d'un filtre consistant en des fibres de matière siliceuse ;
b) le traitement du filtre avec un réactif de base pour maximiser la concentration à la surface de groupes silanol libres ;
c) le séchage du filtre ;
d) le traitement avec un agent silanisant Xn-SiRm dans lequel n et m sont des entiers et n + m = 4, n > 0, m > 0, X égaux ou différents sont un halogénure ou un alcoxy ou un phénol ou un allyle ou un carboxy ou un silyle ou un siloxy ou un alkylthiol ou un phénylthiol ou un sulfate ou une 2-pyridine ou un 1-imidazole ou un amino ou un N-amide ou un O-amide ou un azide et R, égal ou différent, est de l'hydrogène ou un groupe caractéristique comprenant au moins un alkyle halogéné ou un alcène halogéné ou non halogéné et/ou au moins un noyau aromatique halogéné ou non halogéné et/ou au moins un nitrile,
catalysé par irradiation avec un rayonnement ionisant et réalisé par immersion dans une solution de l'agent silanisant ou par dépôt sur le filtre des vapeurs de l'agent silanisant chauffé,
en présence d'un solvant de réaction ayant une température d'ébullition égale ou supérieure à la température de réaction ;
e) le nettoyage de l'excès d'agent silanisant avec un solvant.

2. Procédé selon la revendication 1 dans lequel dans l'étape b) le réactif de base est choisi dans le groupe comprenant une solution de NH₃, NaOH, KOH, LiOH, Ca(OH)₂, Be(OH)₂, Mg(OH)₂, Sr(OH)₂, Ba(OH)₂, des carbonates et des bicarbonates d'alcali et de métaux alcalino-terreux, des sulfites et des bisulfites d'alcali et de métaux alcalino-terreux, des phosphates d'alcali et de métaux alcalino-terreux, des hypochlorites et des chlorites d'alcali et de métaux alcalino-terreux, CH₃O⁻Na⁺, CH₃O⁻K⁺, (CH₃O⁻)₂Ca⁺⁺, CH₃CH₂O⁻Na⁺, CH₃CH₂O⁻K⁺, (CH₃CH₂O⁻)₂Ca⁺⁺, des amines organiques, et des mélanges de ceux-ci.

3. Procédé selon les revendications 1 ou 2, dans lequel dans l'étape d) la température de réaction est entre la température ambiante et la température d'ébullition de l'agent silanisant ou du solvant de réaction.

4. Procédé selon l'une quelconque des revendications 1 à 3 dans lequel dans l'étape d) le solvant de réaction a une température d'ébullition égale ou supérieure à la température de réaction.

5. Procédé selon l'une quelconque des revendications 1 à 4 dans lequel dans l'étape d) X, égaux ou différents, sont un halogénure ou un alcoxy.
